# EUROPÄISCHE PATENTSCHRIFT

(11) **EP 0 421 050 B1**
(45) Veröffentlichungstag und Bekanntmachung des Hinweises auf die Patenterteilung: **08.12.1993**
(21) Anmeldenummer: 90107939.2
(22) Anmeldetag: 26.04.1990
(51) Int. Cl.: A22C 11/02

(54) **Vorrichtung zum Führen einer unter Vorschubdruck stehenden pastösen Masse durch ein Rohr**
Device for transporting at pressure a doughy mass through a conduit
Appareil de transport sous pression d'une matière pâteuse dans un conduit

(30) Priorität: 03.10.1989 DE 8911781 U
(43) Veröffentlichungstag der Anmeldung: 10.04.1991
(73) Patentinhaber: Albert Handtmann Maschinenfabrik GmbH & Co. KG, D-88400 Biberach (DE)
(72) Erfinder: Kern, Manfred, D-7951 Ummendorf (DE); Staudenrausch, Georg, D-7950 Biberach-Rissegg (DE)
(74) Vertreter: Grünecker, Kinkeldey, Stockmair & Schwanhäusser Anwaltssozietät

(56) Entgegenhaltungen:
- FR-A- 2 170 028
- FR-A- 2 240 697
- US-A- 1 484 741
- US-A- 3 399 423
- US-A- 4 817 244
- US-A- 4 905 587

## Beschreibung

Die Erfindung betrifft eine Vorrichtung zum Führen einer unter Vorschubdruck stehenden, pastösen Masse, vorzugsweise Wurstbrät, durch ein die Masse führendes Rohr, bestehend aus einem Rohr, dessen Innenraum über eine Ringnut und einen Ringspalt mit einer äußeren Zuführeinrichtung für ein zwischen die Innenwand des Rohres und die Oberfläche der pastösen Masse mit hohem Druck zu pressendes Gleitmittel in Verbindung steht.

Eine solche Vorrichtung ist durch die deutsche Patentschrift 23 04 715 bekanntgeworden.

Bei dieser bekannten Vorrichtung ist ein stets offener Ringspalt vorgesehen. Wenn der Druck im Gleitmittel infolge Druckschwankungen geringer ist als der Druck im Brät, wird das Brät durch den Überdruck in den Ringspalt gedrückt, so daß dieser verstopft. Außerdem muß eine Regeleinrichtung vorgesehen sein, damit gewährleistet ist, daß vor dem Durchpressen des Brätes bereits die Zuführeinrichtung für das Gleitmittel in Gang gesetzt wird und außerdem der Vorschub für das Brät sofort unterbrochen wird, wenn der Druck im Gleitmittel ausbleibt.

Der Erfindung liegt die Aufgabe zugrunde, eine solche bekannte Vorrichtung so auszubilden, daß ohne aufwendige Regelung ein Verstopfen des Ringspaltes durch Brät bei Druckschwankungen im Gleitmittel verhindert wird.

Zur Lösung dieser Aufgabe sieht die Erfindung bei einer Vorrichtung nach dem Oberbegriff des Anspruches 1, die im Kennzeichen dieses Anspruchs angegebenen Merkmale vor.

Durch diese Maßnahmen wird der Ringspalt in Abhängigkeit von den Druckverhältnissen im Gleitmittel und im Brät selbsttätig verschlossen, so daß ein Eindringen des Bräts in den Ringspalt und ein Verstopfen desselben mit einfachsten Mitteln verhindert wird.

Die vorgespannte Feder kann dabei in besonders gunstiger Weise als gummielastischer Ring ausgebildet werden. Wenn dabei die Innenfläche des Ringes eine Innenwandfläche des Rohres bildet, so wird die Schließkraft des gummielastischen Ringes durch den herrschenden Brätdruck noch erhöht. Gummi und ähnliche Werkstoffe sind bekanntlich inkompressibel, so daß sich der Ring, der auf drei Seiten eingespannt ist, zum Wurstbrät hin ausbeult. Diese Verformung wird zusätzlich zu der Elastizitätskraft durch den aktiven Druck des Brätes sehr rasch rückgängig gemacht, wenn der Druck im Gleitmittel zu gering wird.

Um den Gleitwiderstand des Brätes im Rohr auch im übrigen möglichst niedrig zu halten, kann die Innenwandung des Gleitkolbens und die Innenwandung des Ringes mit der Innenwandung des Rohres eine praktisch stufenlose Ringfläche bilden.

Wenn die Vorrichtung gemäß der Erfindung einen Bestandteil einer Wurstfüllmaschine mit einem Auslaß für das in eine Hülle zu füllende Brät und einer sich an den Auslaß anschließenden Abdrehvorrichtung mit einem Abdrehgetriebe zum Drehen des Füllrohres und mit einem Bremsringgetriebe bildet, kann eine bauliche Vereinfachung dadurch erzielt werden, daß das Rohr feststehend zwischen dem Auslaß und dem Abdrehgetriebe angebracht ist.

Das die Masse führende Rohr kann auch ein an eine Wurstfüllmaschine angeschlossenes feststehendes Rohr zum sogenannten "Geradeaus-Füllen" sein.

Weitere Vorteile der Erfindung ergeben sich aus der nachfolgenden Beschreibung in Verbindung mit der Zeichnung.

Dabei zeigen:
- Fig.1: eine Seitenansicht einer Füllmaschine im Schema und
- Fig.2: in größerem Maßstab die Vorrichtung zum Führen des unter Vorschubdruck stehenden Wurstbrätes in einem Axialschnitt.

In den Ausführungsbeispielen wird der Erfindungsgedanke anhand einer Wurstfüllmaschine erläutert, wobei als Gleitmittel Wasser verwendet wird.

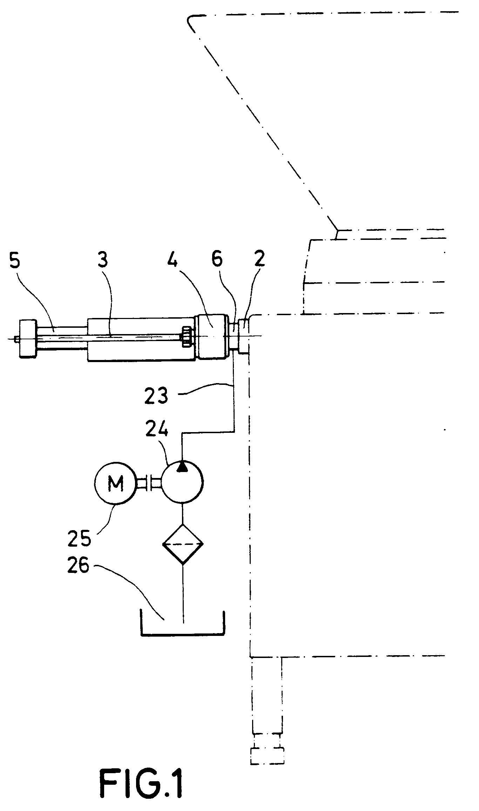

In Figur 1 ist mit 1 die strichpunktiert gezeichnete Wurstfüllmaschine angeführt, die in der üblichen Weise einen Auslaß 2 aufweist, zu welchem das Wurstbrät durch eine Fördereinrichung z.B. mittels eines Kolbens durch Erzeugung einer entsprechenden Vorschubkraft befördert wird.

Das Wurstbrät wird durch eine Tülle 3 gepreßt, die mittels eines Abdrehgetriebes 4 in Drehung versetzt wird.

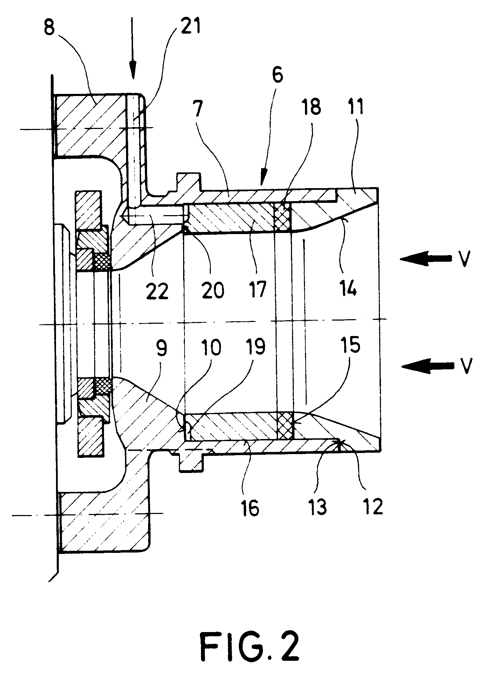

Zum Abdrehen ist in bekannter Weise außerdem ein Bremsringgetreibe 5 vorgesehen. Zwischen dem Auslaß 2 und der Tülle 3 bzw. dem Abdrehgetriebe 4 ist ein Rohr 6 eingeschaltet, dessen Ausgestaltung und Funktion im Zusammenhang mit der Figur 2 erläutert wird.

Das Rohr 6 besteht im gezeichneten Ausführungsbeispiel aus einer Hülse 7, die sich zum Abdrehgetriebe 4 hin nach außen zu einem Ringwulst 8 erweitert und sich in Richtung zur Tülle hin in Form eines Trichters 9 verengt.

Am Anfang des Trichters 9 weist die Hülse 7 eine Schulter 10 auf.

Die Transportrichtung des Wurstbrätes ist durch die Pfeile V angedeutet.

Auf das in Transportrichtung gesehen rückwärtige Ende der Hülse 7 ist eine Anschlußhülse 11 aufgeschoben, die mit einem Bund 12 am stirnseitigen Ende 13 der Hülse 7 anliegt.

Die Anschlußhülse 11 verengt sich in Transportrichtung des Brätes in Form eines Konus 14.

Am Ende des Konus weist die Anschlußhülse eine Schulter 15 auf, so daß durch die beiden Schultern 10 und 15 und die Innenfläche der Hülse 7 eine innere Ringaussparung 16 gebildet wird, in welcher ein hülsenförmiger Gleitkolben 17 angeordnet ist.

Der hülsenförmige Gleitkolben 17 ist etwas kürzer als die Ringaussparung 16, so daß zwischen dem rückwärtigen Ende des Gleitkolbens 17 und der sich an den Konus 14 anschließenden Schulter 15 Platz geschaffen ist für einen Ring 18, der aus einem gummielastischen Werkstoff gefertigt ist.

Der Gleitkolben 17 weist auf seiner vorderen Stirnseite eine Ringnut 19 auf, die nach innen durch eine die Ringnut axial überragende stirnseitige Ringschulter 20 begrenzt ist.

Im Ringwulst 8 der Hülse 7 ist eine radiale Bohrung 21 eingearbeitet, die mit einer axialen Bohrung 22 in Verbindung steht. Diese Bohrung 22 mündet in die Ringnut 19.

Die radiale Bohrung 21 ist mit einer Wasserleitung 23 verbunden, wie in der Figur 1 schematisch dargestellt.

Durch die Wasserleitung 23 wird mittels einer Pumpe 24, z.B. einer Dreikolbenpumpe Wasser gepreßt.

Die Wasserpumpe 24 kann durch einen drehzahlgeregelten Elektromotor 25 angetrieben werden.

Bei Wasser als Gleitfilm kann die Pumpe 24 direkt an die örtliche Wasserleitung angeschlossen werden. Es ist jedoch ebenso möglich, ein Fluid zum Erzeugen eines Gleitfilmes aus einem Vorratsbehälter 26 anzusaugen, wie in Figur 1 angedeutet.

Der hülsenförmige Gleitkolben 17 ist in der Hülse 7 mit Gleitsitz gelagert, so daß er gegen die Kraft des gummielastischen Ringes 18 axial verschiebbar ist. Der gummielastische Ring 18 steht unter einer beträchtlichen Vorspannung, so daß der hülsenförmige Gleitkolben 17 mit seiner Ringschulter 20 an die Schulter 10 angepreßt ist.

Der Konus 14 geht an seinem verjüngten Ende in einen Durchmesser über, der mit dem Innendurchmesser des Ringes 18 und dem Innendurchmesser des Gleitkolbens 17 übereinstimmt, so daß diese Teile eine praktisch stufenlose innere Ringfläche bilden.

Die neue Vorrichtung arbeitet wie folgt:

Beim Ingangsetzen der Wurstfüllmaschine wird gleichzeitig der Antriebsmotor 25 für die Wasserpumpe 24 eingeschaltet, so daß die Pumpe 24 über die Leitung 23 und die Bohrungen 21 und 22 Wasser in die Ringnut 19 des Gleitkolbens 17 preßt, so daß dieser stirnseitig durch diesen Wasserdruck beaufschlagt wird. Der Druck des Wassers ist deutlich höher als der Druck des Brätes, welches durch das Innere des Rohres 6 zur Tülle 3 gepreßt wird.

Die Vorspannung des Ringes 18 ist so gewählt, daß bei einem bestimmten Mindestdruck des Wassers, z.B. von sechs Bar der Gleitkolben 17 um einen sehr geringen Betrag axial nach hinten verschoben wird, so daß sich zwischen der Ringschulter 20 und der Schulter 10 ein sehr schmaler Ringspalt einstellt, durch welchen das Wasser als sehr dünner Film hindurchtritt und sich gleichmäßig über die Innenfläche des Trichters 9 und die nachfolgenden Wandungen für das Brät verteilt, so daß zwischen der Oberfläche des Brätes und den das Brät führenden Innenwandungen ein sehr dünner Gleitfilm geschaffen wird, welcher die Reibung zwischen dem Brät und der Innenwandung in hohem Maße herabsetzt, so daß ein "Schmieren" des Brätes an der Brätstrangoberfläche verhindert wird.

Der erforderliche Ringspalt zwischen der Ringschulter 20 und der Schulter 10 stellt sich durch den eingestellten Wasserstrom selbsttätig ein.

Wenn bei Störungen der Wasserdruck abfällt, preßt der gummielastische Ring 18 automatisch die Ringschulter 20 auf die Schulter 10, so daß kein Brät in den Ringspalt zwischen den beiden Schultern gelangen kann und so ein Verstopfen des Ringspaltes automatisch verhindert wird. Dies gilt selbstverständlich auch für den Fall, daß durch eine Störung die Wasserzufuhr vorübergehend vollständig ausfällt.

Der erforderliche Wasser-Volumen-Strom zum Erzeugen eines Gleitfilmes ist abhängig von der gewünschten Gleitfilmdicke sowie dem Tülleninnendurchmesser und dem Füllgutvolumenstrom, d.h. der Brätfördergeschwindigkeit. Der erforderliche Druck stellt sich entsprechend dem Füllgutdruck (Brätdruck) und der Dichtungsvorspannung so ein, daß die erforderliche Flüssigkeitsmenge zugeführt werden kann. Die Zuführung eines vorgewählten Wasser-Volumen-Stromes erfolgt somit unabhängig von dem Druck im Brät.

## Patentansprüche

1. Vorrichtung zum Führen einer unter Vorschubdruck stehenden, pastösen Masse, vorzugsweise Wurstbrät, durch ein die Masse führendes Rohr, bestehend aus einem Rohr (6), dessen Innenraum über eine Ringnut (19) und einen Ringspalt mit einer äußeren Zuführeinrichtung (24) für ein zwischen die Innenwand des Rohres (6) und die Oberfläche der pastösen Masse mit hohem Druck zu pressendes Gleitmittel in Verbindung steht, **dadurch** **gekennzeichnet,** daß in einer inneren Ringaussparung (16) des Rohres (6) ein durch das Gleitmittel in der Ringnut (19) stirnseitig beaufschlagbarer hülsenförmiger Gleitkolben (17) gegen die Kraft einer vorgespannten Feder (18) axial verschiebbar ist, und daß der Gleitkolben (17) eine die stirnseitige Ringnut (19) in axialer Richtung überragende stirnseitige Ringschulter (20) aufweist, zum Verschließen und Öffnen des Ringspalts bei niedrigem bzw. hohem Gleitmitteldruck.

2. Vorrichtung nach Anspruch 1,
**dadurch** **gekennzeichnet,**
daß die vorgespannte Feder als gummielastischer Ring (18) ausgebildet ist.

3. Vorrichtung nach Anspruch 2,
**dadurch gekennzeichnet,**
daß die Innenfläche des Ringes (18) eine Innenwandfläche des Rohres (6) bildet.

4. Vorrichtung nach den Ansprüchen 1 bis 3,
**dadurch gekennzeichnet,**
daß die Innenwandung des Gleitkolbens (17) und die Innenwandung des Ringes (18) mit der Innenwandung des Rohres (6) eine praktisch stufenlose Ringfläche bilden.

5. Wurstmaschine mit einem Auslaß (2) für das in eine Hülle zu füllende Brät und eine sich an den Auslaß anschließende Abdrehvorrichtung (4, 5) mit einem Abdrehgetriebe (4) zum Drehen des Füllrohres und mit einem Bremsringgetriebe (5),
**gekennzeichnet durch**
eine Vorrichtung nach einem der Ansprüche 1 bis 4, wobei das Rohr (6) feststehend zwischen dem Auslaß (2) und dem Abdrehgetriebe (4) angebracht ist.

## Claims

1. Apparatus for guiding a pasty composition which is under feed pressure, preferably sausage meat, through a tube guiding the composition, consisting of a tube (6) of which the interior communicates via an annular groove (19) and an annular gap with an outer delivery device (24) for a lubricant to be forced at high pressure between the inner wall of the tube (6) and the surface of the pasty composition, characterised in that a sleeve-like sliding piston (17) which can admit the lubricant in the annular groove (19) in its face is axially displaceable against the force of a pretensioned spring (18) in an inner annular recess (16) of the tube (6), and in that the sliding piston (17) comprises an annular end shoulder (20) which protrudes in an axial direction beyond the annular end groove (19), for closing and opening the annular gap at low or high lubricant pressure.

2. Apparatus according to claim 1, characterised in that the pretensioned spring is constructed as a rubber elastic ring (18).

3. Apparatus according to claim 2, characterised in that the inner surface of the ring (18) forms an inner wall surface of the tube (6).

4. Apparatus according to claims 1 to 3, characterised in that the inner wall of the sliding piston (17) and the inner wall of the ring (18) form, with the inner wall of the tube (6), a practically continuous annular surface.

5. Sausage machine with an outlet (2) for the sausage meat to be stuffed into a casing and a twist-off device (4, 5) adjoining the outlet with a twist-off mechanism (4) for turning the stuffing tube and with a brake ring mechanism (5), characterised by an apparatus according to any of claims 1 to 4, wherein the tube (6) is mounted stationarily between the outlet (2) and the twist-off mechanism (4).

## Revendications

1. Appareil de transport sous pression d'une matière pâteuse, d'une chair à saucisse de préférence, dans un conduit transportant la matière, composé d'un conduit (6), dont l'espace interne communique, par L'intermédiaire d'une rainure annulaire (19) et d'une fente annulaire, avec un dispositif d'alimentation externe (24) pour un lubrifiant à injecter sous haute pression entre la paroi interne du conduit (6) et la surface de la matière pâteuse, caractérisé en ce que, dans un évidement annulaire interne (16) du conduit (6), un piston coulissant (17) en forme de douille, qui peut être sollicité côté frontal par le Lubrifiant dans la rainure annulaire (19), est mobile dans le sens axial contre la force d'un ressort (18) soumis à une tension initiale, et en ce que le piston coulissant (17) présente un épaulement annulaire (20) côté frontal, dépassant dans le sens axial de La rainure annulaire côté frontal (19), pour la fermeture et l'ouverture de la fente annulaire en cas de basse et/ou haute pression du lubrifiant.

2. Appareil suivant la revendication 1, caractérisé en ce aue le ressort sous tension initiale est réalisé sous forme de bague élastique de caoutchouc (18).

3. Appareil suivant la revendication 2, caractérisé en ce que la surface interne de la bague (18) forme une surface de paroi interne du conduit (6).

4. Appareil suivant l'une des revendications 1 à 3, caractérisé en ce que la paroi interne du piston coulissant (17) et la paroi interne de la bague (18) forment une surface annulaire pratiquement continue, avec la paroi interne du conduit (6).

5. Machine à saucisses avec une sortie (2) pour la chair à saucisse à charger dans un manchon, et un dispositif de torsion (4, 5) prolongeant la sortie, avec un mécanisme de torsion (4) pour la rotation du conduit de remplissage et avec un mécanisme à bague de freinage (5), caractérisée par un dispositif, suivant l'une quelconque des revendications 1 à 4, le conduit (6) étant monté d'une manière stationnaire entre la sortie (2) et le mécanisme de torsion (4).
